# DEMANDE DE BREVET EUROPEEN

(11) **EP 0 717 519 A1**
(43) Date de publication de la demande: **19.06.1996**
(21) Numéro de dépôt: 95402796.7
(22) Date de dépôt: 12.12.1995
(51) Int. Cl.: H04J 3/16, H04J 3/24

(54) **Système de multiplexage par paquets adaptatif par calcul d'échéances dynamiques**

(30) Priorité: 13.12.1994 FR 9415001
(71) Demandeur: ALCATEL N.V., NL-2288 BH Rijswijk (NL)
(72) Inventeur: Le Gall, Jean-Yves, F-31390 Lafitte-Vigordane (FR)
(74) Mandataire: Prugneau, Philippe

(57) **Abrégé**

Le système de multiplexage sert à mettre en série des données provenant d'organes sources. Il comprend des circuits interface (3a-3d) aptes à accumuler, dans une mémoire tampon (30), un certain nombre de données provenant d'un organe source correspondant. Un générateur de trames vides (2) fait circuler une série de trames sur une liaison bouclée passant par les circuits interface. Chaque circuit interface est agencé pour calculer une échéance (HLA) au delà de laquelle sa mémoire tampon est suceptible de saturer et pour déposer cette échéance dans une trame vide qui passe. Quand cette trame revient au générateur de trames, elle comporte l'identification du circuit interface qui a déposé l'échéance la plus précoce. Le générateur renvoie une trame vide sur la liaison avec l'identificateur de ce circuit interface qui reconnaît alors sa possibilité de transférer des données accumulées dans sa mémoire.

## Description

L'invention porte sur système de multiplexage de données numériques, notamment pour une installation de collectage de données numériques embarquée sur un satellite.

Une installation de collectage de données numériques embarquée sur un satellite est connue de la demande de brevet européen N°0494018.

Un satellite est normalement équipé d'un certain nombre d'instruments, tels que des instruments optiques, des instruments radar, ou autres, qui par exemple mesurent des phénomènes physiques et transcrivent ces grandeurs sous forme de données numériques classiquement constituées par des suites de bits.

Cependant, certains instruments élaborent, dans un intervalle de temps donné par exemple, un grand nombre de bits de mesure, tandis que d'autres en élaborent, dans ce même intervalle de temps, un nombre plus restreint. En d'autres termes, les débits d'informations diffèrent, dans des proportions pouvant être importantes, selon les instruments. Ces informations n'ont en outre généralement aucune raison d'être en synchronisme les unes par rapport aux autres.

Par ailleurs, les suites binaires issues de ces différents instruments de mesure doivent être formatées, c'est-à-dire que l'on doit associer par exemple une série de 8000 bits représentatifs d'une information de mesure, des bits placés en tête et permettant en particulier aux stations terriennes qui reçoivent ensuite ces informations de mesure d'identifier l'origine de ces suites binaires. Par exemple, il est prévu un nombre déterminé de bits d'identification de l'instrument de mesure qui est à l'origine de la suite binaire, quelques autres bits pour indiquer la longueur de cette suite binaire, d'autres bits pour identifier le satellite d'où provient cette mesure, etc....

Dans le satellite est réalisé un multiplexage, ou concaténation, de ces différentes suites binaires, de manière à réaliser leur mise en série pour émission immédiate ou ultérieure, ainsi que leur aiguillage vers différentes interfaces de sortie vers par exemple différents émetteurs radioélectriques et/ou différents dispositifs d'enregistrement.

Le multiplexage d'informations d'instruments de débits variables et asynchrones peut conduire dans le cas de nombreux instruments à des capacités de stockage très importantes et/ou des débits binaires considérables à l'intérieur du multiplexeur. Ces capacités de stockage et débits binaires peuvent être incompatibles avec les contraintes de fiabilité et de qualité de liaison qui caractérisent les missions spatiales.

Le processus utilisé pour minimiser les capacités de stockage et les débits binaires internes consiste à définir à l'intérieur du multiplexeur une séquence d'interrogation des différents instruments en fonction des différents débits d'entrée et de sortie et à transférer les données de chaque instrument directement vers le multiplexeur selon cette séquence. Un tel processus présente l'inconvénient de nécessiter un grand nombre de liaisons électriques entre chaque source et le multiplexeur. Pour remédier à cet inconvénient, l'installation de collectage de données numériques connue du document précité comporte un système de multiplexage apte à générer une série de trames vides de bits de données. Chaque trame passe successivement dans les circuits d'interface des instruments du satellite dont on désire collecter les données, de façon à pouvoir être au moins partiellement remplie par les données bien accumulées et pré-formatées par un de ces instruments. Quand un instrument reconnaît sa possibilité de transfert de ses données dans une trame vide, il la remplie avec au moins une partie de ses données. Dans le cas contraire, il fait avancer la trame vide ou pleine vers l'instrument suivant.

Les trames pleines en sortie du dernier instrument sont aiguillées vers des interfaces de sortie. Dans ce système de multiplexage, l'instrument de plus haut débit de données reçoit en premier chaque trame vide qui est générée tandis que l'instrument de plus bas débit de données reçoit en dernier cette trame éventuellement vide. Un tel système de multiplexage fonctionne à l'optimum de ses capacités de transmission quand chaque instrument a un débit constant pendant le processus de multiplexage.

Or il est prévu aussi de monter à bord des satellites des instruments ayant des modes de fonctionnement qui vont varier en fonction des conditions d'observation ou de mesure. Par exemple, les prochains instruments optiques embarqués sur satellite seront équipés d'algorithmes de compression de données d'image numérique à débit variable.

Dans ces conditions, certains instruments auront en plus un débit susceptible de varier dans une large proportion à l'intérieur d'un intervalle de temps donné, c'est-à-dire pendant le processus de multiplexage.

Le système de multiplexage présenté ci-dessus n'est pas prévu pour s'adapter automatiquement à des variations de débit en sortie d'un instrument sauf à sur-dimensionner les capacités de transmission du système de multiplexage ce qui peut poser des problèmes comme indiqué plus haut.

Le but de l'invention est donc de proposer un système de multiplexage, notamment pour une installation de collectage de données pour satellite, capable de s'adapter automatiquement à des variations de débit en sortie des instruments équipant ce satellite et ayant une capacité de transmission exploitée à l'optimum et sans qu'elle soit sur-dimensionnée par rapport à la somme des débits de sortie des instruments.

A cet effet l'invention a pour objet un système de multiplexage dont les caratéristiques sont définies par la revendication 1. Selon cette solution, le système de multiplexage comprend des circuits interface aptes à accumuler, dans une mémoire tampon, un certain nombre de données provenant d'un organe source correspondant. Un générateur de trames vides fait circuler une série de trames sur une liaison bouclée passant par les circuits interface. Chaque circuit interface est agencé pour calculer une échéance au delà de laquelle sa mémoire tampon est suceptible de saturer et pour déposer cette échéance dans une trame vide qui passe. Quand cette trame revient au générateur de trames, elle comporte l'identification du circuit interface qui a déposé l'échéance la plus précoce.

Le générateur renvoie une trame vide sur la liaison avec l'identificateur de ce circuit interface qui reconnaît alors sa possibilité de transférer des données accumulées dans sa mémoire.

L'invention s'étend à une installation de collectage de données numériques pour satellite comportant un tel système de multiplexage.

D'autres caractéristiques et avantages de l'invention ressortiront encore de la description qui suit d'un exemple de réalisation de l'invention.

La figure 1 illustre l'architecture d'une installation de collectage de données numériques pour satellite comprenant un système de multiplexage selon l'invention.

La figure 2 montre la structure d'une trame exploitée par le système de multiplexage selon l'invention.

La figure 3 montre sous forme schématique un circuit d'interface du système de multiplexage selon l'invention.

La figure 4 illustre le fonctionnement d'un générateur de trames faisant partie du système de multiplexage selon l'invention.

Les figures 5 et 6 illustrent le fonctionnement d'un circuit d'interface pour la mise en oeuvre du processus de multiplexage selon l'invention.

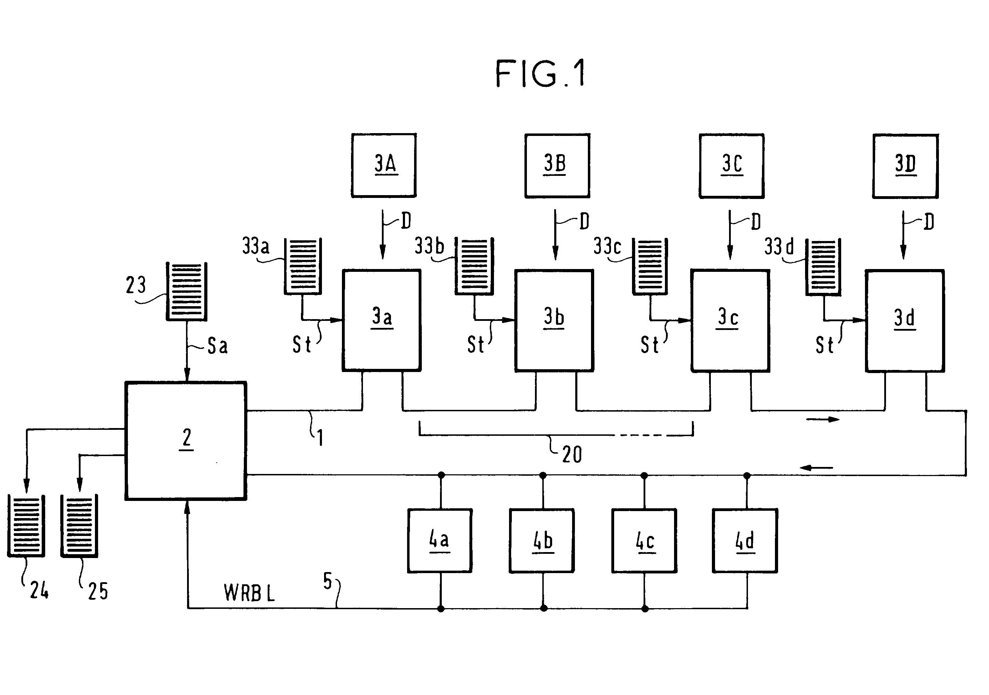

Sur la figure 1, l'installation de collectage de données numériques comprend une pluralité d'organes de prise d'informations et de mise sous forme numérique 3A-3D, tels que des instruments optiques, radar ou autres, habituellement embarqués sur un satellite.

Ces organes sont sous le contrôle d'un organe de commande (non représenté) qui les met en fonctionnement pour un intervalle de temps donné, cet intervalle de temps correspondant généralement à une session de collectage de données.

Lorsqu'ils sont mis en fonctionnement, les organes, fonctionnant de façon asynchrone, produisent en parallèle plusieurs flots de données numériques telles que D à des rythmes ou débits différents et variables.

L'installation comprend encore un canal 1 câblé en boucle sur un circuit générateur de trames 2 et qui passe successivement à travers des circuits d'interface 3a-3d des organes de prises d'informations 3A-3D. Ce canal peut être une liaison série à haut débit, le niveau de débit de la liaison étant telle qu'il est à peine supérieure à la somme des débits crête de sortie des organes 3A-3D. En pratique, cette liaison est définie par programmation d'une matrice de commutation permettant de connecter sélectivement la liaison à certains des circuits d'interface.

Le circuit générateur de trames 2, qui fait partie d'un système de multiplexage temporel, génère de façon ininterrompue des trames vides de bits de données 20 et les dépose, l'une après l'autre, sur le canal.

Ce faisant, chaque trame vide de bits de données 20 passe successivement par les circuits d'interface 3a-3d pour être éventuellement remplie par des bits de données D provenant d'un organe de prise d'informations, en l'occurrence par un paquet de 1280 octets qui définit aussi la dimension d'une trame 20.

En sortie du dernier circuit d'interface, chaque trame vide ou pleine de bits de données revient vers le circuit générateur de trames vides 2 en ayant effectué une boucle.

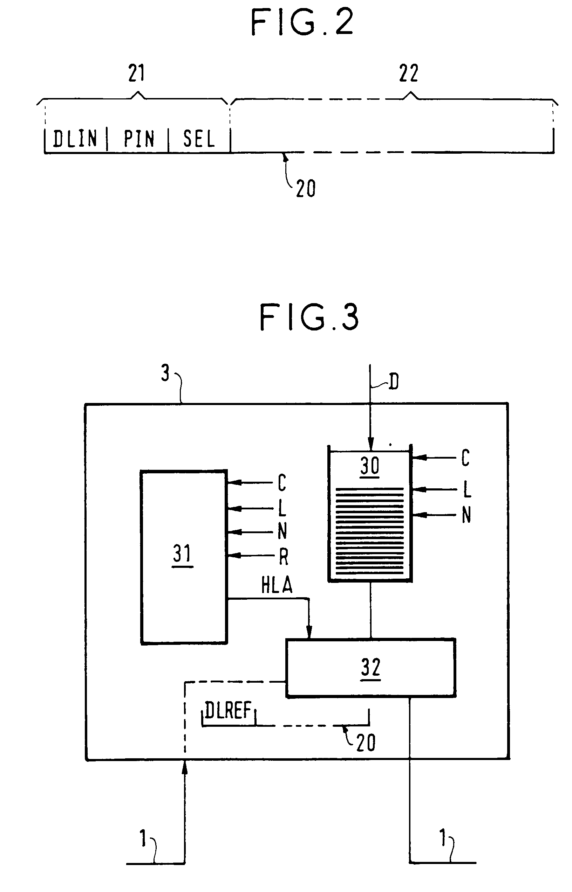

Comme visible sur la figure 2, chaque trame comporte une zone d'en-tête 21 et une zone de données 22. La zone d'en-tête 21 comprend une première série de bits de contrôle désignée par DLIN, une seconde série de bits de contrôle désignée par PIN et une troisième série de bits de contrôle désignée par SEL dont l'utilité sera mise en évidence plus loin.

Le circuit générateur de trame 2 fonctionne selon l'algorithme suivant. Au début d'une session de collectage de données, il envoie sur le canal une première trame 20, dite trame sonde, ayant une zone de données 22 vide de bits de données et une zone d'en-tête 21 dans laquelle la série de bits DLIN est représentative d'un délai de référence DLREF déterminé. Ce délai DLREF est tel qu'il est bien supérieur à la valeur d'une échéance calculée par un circuit d'interface, comme on le verra par la suite. Dans l'exemple, la série de bits DLIN comporte 8 bits. La seconde série de bits PIN dans la zone d'en-tête de la trame sonde sert au codage d'une suite d'identificateurs de circuits d'interface. Dans l'exemple, la série de bits PIN comprend 4 bits, chaque bit de la série étant positionné à la valeur binaire 1 étant représentatif d'un des quatre circuits d'interface. Pour la trame sonde, les bits de la série de bits PIN sont mis à la valeur binaire 0 de sorte que cette série de bits PIN code une suite vide d'identificateurs. La troisième série de bits SEL de la zone d'en-tête sert au codage d'un identificateur de circuit d'interface. Dans l'exemple, cette série de bits SEL comprend 4 bits, le bit positionné à la valeur binaire 1 étant représentatif d'un des circuits d'interface. Dans la trame sonde, la série de bits SEL a tous ses bits à la valeur binaire 0.

Cette trame sonde passe successivement à travers les circuits d'interface. Lors du passage de la trame sonde dans un des circuits d'interface, celui-ci scrute le contenu de la zone d'en-tête de la trame sonde et effectue le cas échéant des traitements qui sont précisés plus loin.

En sortie du dernier circuit d'interface, le circuit 3d sur la figure 1, la trame sonde revient dans le circuit 2. En réponse, celui-ci génère une nouvelle trame de transfert 20 qui, à son tour, transite sur le canal en empruntant le même circuit que la trame sonde de sorte que des trames de transfert successives transitent sur le canal de transfert 1 et reviennent dans le circuit générateur de trame de façon ininterrompue.

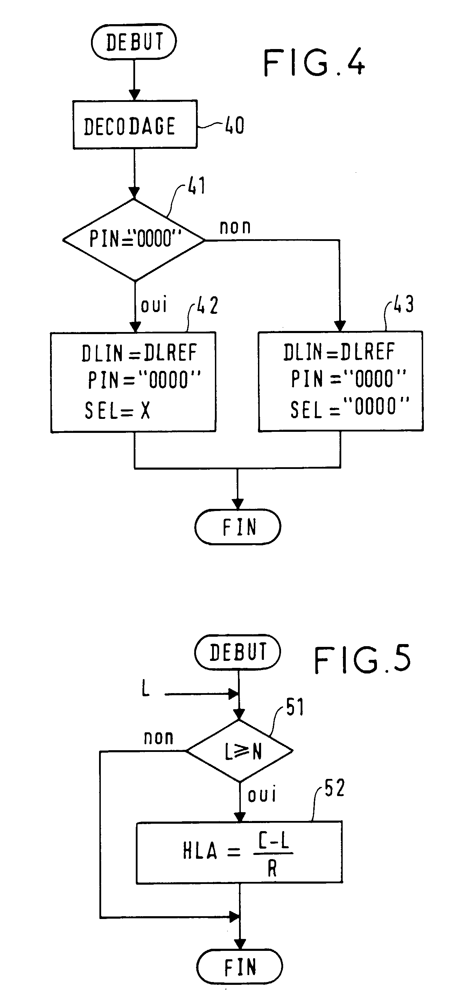

Maintenant sur réception d'une trame de transfert 20, que ce soit la trame sonde ou une nouvelle trame comme indiquée ci-dessus, le circuit générateur de trame 2 fonctionne selon l'algorithme suivant en se référant à la figure 4:
- décoder en 40 la zone d'en-tête de la trame pour récupérer la série de bits PIN;
- comparer en 41 la série de bits PIN au mot "0000" pour détecter la présence d'un ou de plusieurs identificateurs de circuits d'interface, dans l'exemple, un ou plusieurs bits à la valeur binaire 1;
- si au moins un identificateur de circuit d'interface est présent dans la série de bits PIN (un bit de la série positionné à la valeur binaire 1), alors envoyer en 42 une nouvelle trame vide de bits de données sur le canal 1 avec dans la zone d'en-tête une série de bits DLIN codant le délai DLREF, une série de bits PIN codant une série vide d'identificateurs de circuits d'interface (tous les bits de la série PIN positionnés à la valeur binaire 0), une série de bits SEL codant un seul identificateur d'interface si un identificateur au moins était présent dans la liste codée par la série de bits PIN (un des bits (symbolisé par X) de la série de bits SEL positionné à la valeur binaire 1);
- sinon envoyer en 43 une nouvelle trame vide de bits de données sur le canal 1 avec dans la zone d'en-tête une série de bits DLIN codant le délai DLREF, une série de bits PIN avec tous ses bits mis à la valeur binaire 0, une série de bits SEL avec tous ses bits mis à la valeur binaire 0.

Chaque circuit d'interface indiqué d'une façon générale par 3 sur la figure 3, comporte une mémoire tampon 30 fonctionnant en FIFO qui sert à accumuler une série de bits de données D élaborées par un organe de prise d'informations. En pratique, la capacité C de la mémoire tampon doit être suffisante pour pouvoir accumuler des bits de données, sans débordement, pendant deux tours de trame.

Sur la figure 3, on a représenté dans le circuit interface deux blocs de traitements distincts, l'un 31 pour le calcul d'une échéance locale, l'autre 32 pour la manipulation des trames vides.

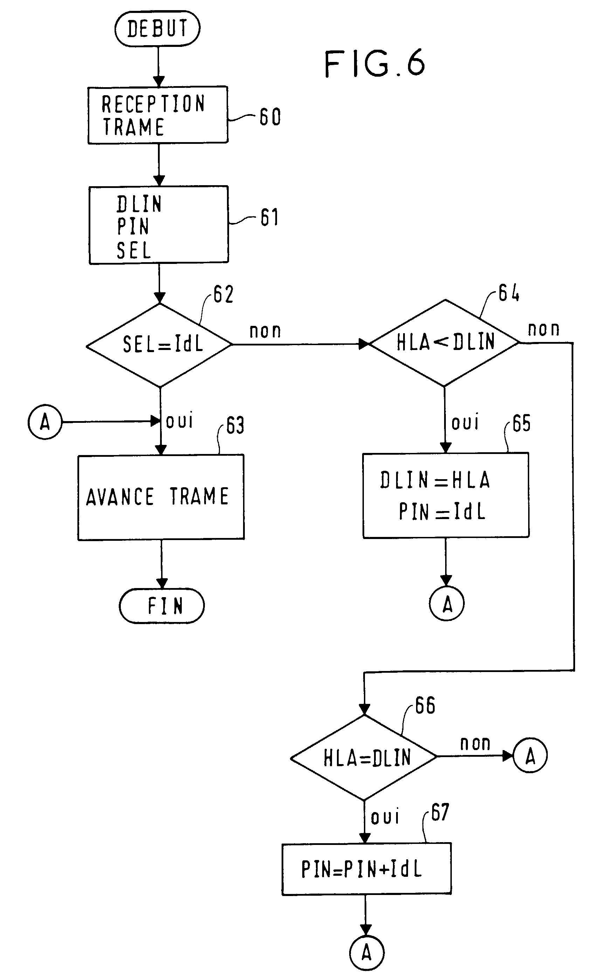

Dans le bloc 31, le circuit d'interface fonctionne selon l'algorithme suivant qui est illustré à la figure 5. En 51, si au cours de la gestion en temps réel de la mémoire tampon 30, le niveau de remplissage L de cette mémoire atteint un niveau déterminé N fixé à par exemple 1280 octets, alors calculer en 52 une échéance locale HLA sur la base de la relation suivante :

HLA = (C-L)/R où R est la valeur du débit d'entrée des données D (fournies par l'instrument considéré) dans la mémoire tampon 30. Ce débit d'entrée peut être préfixé et dans ce cas il s'agit du débit maximal de l'instrument. Il peut aussi être mesuré cycliquement si des organes de mesure de débit sont prévus dans le circuit d'interface 3.

Cette échéance locale HLA peut être calculée en temps réel, par exemple à chaque accumulation d'une nouvelle donnée dans la mémoire tampon 30, et/ou à chaque passage d'une trame vide dans le circuit d'interface considéré. Elle n'est pas calculée quand le niveau de remplissage L de la mémoire tampon est inférieur à la valeur N.

Maintenant dans le bloc de traitement 32, le circuit d'interface fonctionne selon l'algorithme suivant qui est illustré à la figure 6.

Sur détection en 60 du passage d'une trame vide de bits de données telle que 20 :
- décoder en 61 la zone d'en-tête de la trame pour récupérer les séries de bits DLIN, PIN et SEL ;
- comparer en 62 la série de bits SEL à un identificateur local de circuit d'interface IdL. Dans l'exemple considéré, l'identificateur local est un mot de 4 bits dont un des bits est mis à la valeur binaire 1, ce bit étant représentatif d'un circuit d'interface ;
- si la série de bits SEL est identique à l'identificateur local IdL (la zone d'en-tête de la trame vide contient l'identificateur local IdL du circuit d'interface), alors remplir en 63 la trame vide de bits de données avec les bits d'un paquet de données prélevées dans la mémoire tampon 30 et faire avancer la trame sur le canal;
- si la série de bits SEL est différent de l'identificateur local IdL (la zone d'en-tête de la trame ne contient pas l'identificateur IdL du circuit d'interface), alors comparer en 64 la série de bits DLIN avec l'échéance local HLA calculée par le circuit d'interface si celle-ci existe au moment du passage de la trame ;
- si HLA est strictement inférieure à la série de bits DLIN, alors coder en 65 l'échéance locale HLA dans la série de bits DLIN, coder la série de bits PIN pour entrer seulement l'identificateur IdL du circuit d'interface dans la série d'identificateurs de circuits d'interface et faire avancer la trame sur le canal ;
- Si HLA est égale à la série de bits DLIN en 66, alors coder en 67 la série de bits PIN pour entrer l'identificateur IdL du circuit d'interface à la suite de la série d'identificateurs de circuits d'interface et faire avancer la trame sur le canal ;
- sinon faire avancer la trame sur le canal sans modifier sa zone d'en-tête.

Le traitement qui vient d'être indiqué ci-dessus est fait de la même façon par chaque circuit d'interface d'instrument 3a-3d. Le premier circuit d'interface sur la boucle le plus près du circuit générateur de trames 2 récupère toujours comme série de bits DLIN le délai DLREF.

La comparaison en 64 sur la figure 6 est donc effective si ce délai DLREF est fixé à une valeur bien supérieure à une valeur quelconque d'échéance locale HLA calculée par le circuit d'interface 3a.

Si plusieurs circuit d'interface, lors du passage d'une trame vide de bits de données, disposent d'une échéance locale calculée, cette trame en sortie du dernier circuit d'interface aura une zone d'en-tête ayant une série de bits DLIN codant une échéance locale calculée par un au moins des circuits interface, cette échéance étant celle qui est la plus précoce, et une série de bits PIN codant une série d'identificateurs d'interface contenant au moins l'identificateur IdL du circuit ou des circuits ayant calculé cette échéance locale la plus précoce.

Sur réception de cette trame dans le circuit générateur de trame 2, ce dernier renvoie une nouvelle trame ayant une zone d'en-tête avec une série de bits SEL codant seulement l'identificateur du circuit d'interface qui a calculé à un tour précédent de trame, l'échéance locale la plus précoce.

Au passage de cette nouvelle trame, ce circuit d'interface reconnaissant son identificateur local dans la série de bits SEL de la zone d'en-tête de cette trame, pourra vider au moins partiellement sa mémoire tampon d'un paquet de données qui ont été bien accumulées et remplir la nouvelle trame vide avec les bits de données de ce paquet de données.

A la fin d'une session d'enregistrement, l'organe de commande force les circuits d'interface de telle manière à vider complètement les mémoires tampon selon une séquence déterminée.

Ainsi, le système de multiplexage temporel par paquets de données de longueur fixe selon l'invention met en série sur le canal 1 des paquets de données successifs prélevés, l'un après l'autre, des mémoires tampon selon un ordre basé sur le calcul d'échéances locales dynamiques ce qui lui permet de s'adapter automatiquement aux variations de débits des sources constituées par les organes de prise d'informations du satellite.

En pratique, si la somme des débits de sortie des organes de prises d'information s'approche de la bande passante du système de multiplexage, chaque trame en sortie du dernier circuit d'interface, le circuit d'interface 3d en l'espèce, a une zone de données 22 remplie avec des bits de données et une zone d'en-tête 21 contenant une échéance locale calculée par un des circuits d'interface et l'identificateur de ce circuit d'interface de sorte que la bande passante du système de multiplexage est exploité en totalité.

L'installation montrée à la figure 1 comporte aussi des organes de sortie (indiqués par 4a-4d) raccordés au canal et qui peuvent être par exemple des émetteurs radioélectriques ou des dispositifs d'enregistrement.

Ces organes de sortie peuvent être affectés respectivement aux organes de prises d'information et dans ce cas chaque organe de sortie est programmé pour reconnaître dans chaque trame pleine de données qu'il reçoit, l'identificateur local IdL d'un circuit d'interface codé dans la série de bits SEL de la zone d'en-tête de cette trame aux fins de récupération des données contenues dans la trame et mise en forme ultérieure de ces données.

Selon une particularité avantageuse de l'installation de collectage de données selon l'invention, les organes de sortie 4a-4d sont des cartes mémoires partagées par les organes de prises d'information pour le stockage des données qu'ils produisent.

Par ailleurs, chaque trame pleine de données a une zone d'en-tête contenant des séries de bits supplémentaires pour le codage d'au moins deux adresses Sa,St.

La première adresse Sa est prélevée d'une liste d'adresses 2'' établie au début d'une session d'enregistrement, par exemple par l'organe de commande, ces adresses étant consommées ou recyclées par le circuit générateur de trames vides 2 comme décrit ci-après. Les adresses Sa de la liste 23 pointent sur des emplacements mémoire dans les cartes mémoires.

Les circuits d'interface exploitent respectivement des listes d'adresses St telles que 33a-33d établies au début d'une session d'enregistrement par exemple par l'organe de commande. Les adresses dans les listes d'adresses 33a-33d pointent sur des seconds emplacements mémoires différents des premiers emplacements mémoire. Chaque circuit d'interface dispose d'une liste d'adresses St en nombre suffisant pour le stockage des paquets de données produites par l'instrument dont il dépend à raison par exemple d'une adresse St par paquet de données à stocker.

Dans l'étape 42 à la figure 4, le circuit générateur de trames vides prélève une adresse Sa de la liste 23 et la code dans la zone d'en-tête de la trame vide générée.

Dans l'étape 63 à la figure 6, un circuit d'interface, par exemple le circuit d'interface 3a, prélève une adresse Sa de sa liste d'adresses 33a et la code dans la zone d'en-tête de la trame qu'il remplit avec des bits de données.

Chaque trame pleine de bits de données est diffusée vers l'ensemble des cartes mémoire raccordées au canal 1. Ce faisant, chacune d'elle, en reconnaissant l'une des adresses Sa et St ou les deux codées dans la zone d'en-tête de la trame, est apte à récupérer les bits de données dans la trame et les stocker, d'une part, dans un premier emplacement pointé par l'adresse Sa, et d'autre part, dans un second emplacement pointé par l'adresse St de telle sorte que les bits de données d'une trame pleine sont dupliqués au moins temporairement dans les cartes mémoire.

Après relecture automatique des emplacements mémoire pointés par les adresses Sa et St et comparaison bit à bit de ceux-ci aux fins de vérification de la réussite complète, partielle ou de l'échec de l'opération de stockage, les cartes mémoires concernées retournent au circuit générateur de trames 2, par l'intermédiaire d'une liaison spécialisée indiquée par 5 sur la figure 1, un mot d'état WRBL indicatif du succès ou de l'échec de l'opération de stockage.

Dans le cas où le mot d'état WRBL indique un succès complet de l'opération de stockage d'un paquet de données pour des adresses Sa et St, le circuit générateur de trames 2 recycle l'adresse Sa dans la liste 23 et insère l'adresse St, avec le cas échéant, des bits supplémentaires de signature, dans une liste 24 d'adresses d'emplacements mémoire effectivement occupés et lisibles.

Dans le cas où le mot d'état WRBL indique un succès partiel de l'opération de stockage d'un paquet de données pour des adresses Sa et St (emplacement pointé par l'adresse St défaillant), le circuit générateur de trames 2 insère l'adresse Sa dans la liste 24 (cette adresse étant alors définitivement consommée), et l'adresse St dans une liste 25 d'adresses d'emplacements mémoire défectueux.

Dans le cas où le mot d'état WRBL indique un échec de l'opération de stockage d'un paquet de données (cas de deux emplacements mémoire défectueux par exemple), le circuit générateur de trames insère les adresses Sa et St dans la liste 25 et interrompt la session d'enregistrement.

La duplication temporaire des données dans les cartes mémoire permet de mettre en place un système de sécurité simple opérant pendant la session d'enregistrement. A la fin d'une session d'enregistrement, les adresses insérées dans la liste 24 sont regroupées suivant l'origine des données de façon à constituer des fichiers de données affectés chacun à un organe de prise d'informations.

A noter que la liste 23 d'adresses Sa n'a généralement pas à être très importante du fait que ces adresses sont recyclées en cas de réussite des opérations successives de stockage de paquets de données. Elle peut donc être établie au fur et à mesure de la consommation des adresses Sa.

Chaque adresse Sa ou St peut avantageusement être formée de la combinaison d'un premier champ d'adresse pointant sur un granule de mémoire dont la taille est un multiple de la taille d'un paquet de données et d'un second champ d'adresse pointant sur un segment de mémoire dont la taille est celle d'un paquet de données, ce qui permet de réduire le nombre d'adresses Sa ou St présentes dans les listes 23 ou 33a-33d si la valeur du second champ d'adresse est générée automatiquement par les circuits d'interface. Dans ce cas, la valeur du second champ d'adresse peut être donnée, par exemple, par des compteurs de paquets de données gérés respectivement par les circuits d'interface.

## Revendications

1. Un système de multiplexage, pour la mise en série par paquet de données (D) provenant de différents organes sources (3A-3D), comprenant des circuits interfaces (3a-3d) associés respectivement aux organes sources et munis chacun d'une mémoire tampon (30) apte à accumuler temporairement une certaine quantité de données (D) provenant d'un organe source correspondant, un générateur (2) de trame vide apte à envoyer une série de trames vides sur une liaison bouclée à laquelle sont connectés les circuits interface de sorte que chaque trame vide passant successivement par les circuits interface (3a-3d) peut être remplie d'un paquet de données prélevées de la mémoire tampon d'un des circuits interface, chaque circuit interface étant affecté à l'avance des trames sur la liaison bouclée et chaque trame éventuellement pleine de données en sortie du dernier circuit interface connecté à la liaison bouclée étant réintroduite dans le générateur de trame, caractérisé en ce que le générateur de trame vide est agencé pour générer et envoyer sur la liaison bouclée une première trame vide incluant une première zone d'en-tête contenant une échéance de référence préfixée (DLIN), en ce que chaque circuit interface (3a-3d) est agencé pour calculer une échéance locale (HLA) au delà de laquelle sa mémoire tampon (30) est susceptible de saturer à partir du moment où sa mémoire tampon a déjà atteint un niveau (N) déterminé de remplissage, récupérer l'échéance de référence contenue dans la première zone d'en-tête d'une trame qui passe, remplacer l'échéance de référence dans cette première zone d'en-tête de la trame par son échéance locale (HLA) si cette dernière est la plus précoce et entrer un code d'identification (PIN) qui lui est propre dans une seconde zone d'en-tête de la trame avant de faire avancer cette trame sur la liaison bouclée, en ce qu'en réponse à la réception d'une trame incluant un code d'identification de circuit interface dans sa seconde zone d'en-tête, le générateur de trame vide renvoie sur la liaison bouclée une trame vide contenant, dans la première zone d'en-tête, l'échéance de référence préfixée (DLIN) et, dans une troisième zone d'en-tête, le code d'identification récupéré dans la seconde zone d'en-tête de la trame qu'il a reçue et en ce que chaque circuit interface est en outre agencé pour remplir une trame vide qui passe avec un paquet de données accumulées dans sa mémoire tampon si cette trame vide contient dans la troisième zone d'en-tête un code correspondant à son propre code d'identification.

2. Le système selon la revendication 1, dans lequel une échéance locale HLA est calculée par un circuit interface sur la base de la relation suivante:
HLA= (L-C)/R où
L est défini comme étant un niveau de remplissage de la mémoire tampon (30) du circuit interface,
C est défini comme étant le niveau maximum de remplissage de cette mémoire tampon (30),
R est défini comme étant le niveau de débit de l'organe source associé au circuit interface.

3. Le système selon la revendication 2, avec R défini comme étant le débit maximum de l'organe source.

4. Une installation de collectage de données numériques pour satellite comportant un système de multiplexage selon l'une des revendications 1 à 3, avec des organes de prises d'information comme organes source de données et des cartes mémoire vers lesquelles sont diffusées les trames pleines de bits de données, chaque trame pleine de bits de données ayant en tête au moins une première et une seconde adresses (Sa,St) aptes à être reconnues par les cartes mémoire, et un système de sécurité étant prévu pour stocker les bits de données de chaque trame pleine, d'une part, au moins temporairement dans un premier emplacement mémoire d'une des cartes mémoire pointé par la première adresse et, d'autre part, dans un second emplacement mémoire d'une des cartes mémoire pointé par la seconde adresse, ce système étant en outre agencé pour recycler les premières adresses (Sa) aux fins de réutilisation des premiers emplacements mémoire tant que les secondes adresses (St) pointent sur des seconds emplacements mémoire reconnus non défectueux.
